# EUROPÄISCHE PATENTANMELDUNG

(11) **EP 2 436 495 A2**
(43) Veröffentlichungstag der Anmeldung: **04.04.2012**
(21) Anmeldenummer: 11179617.3
(22) Anmeldetag: 31.08.2011
(51) Int. Cl.: B28B 11/24

(54) **Verfahren zur Härtung von Porensteinen**

(30) Priorität: 01.10.2010 DE 102010037918
(71) Anmelder: HoKa Gesellschaft für Entwicklung und Vertrieb elektronischer Schaltungen mbH, 52146 Würselen-Bardenberg (DE)
(72) Erfinder: Hovestadt, Andreas, 52146 Würselen (DE)
(74) Vertreter: Bauer, Dirk

(57) **Zusammenfassung**

Die Erfindung betrifft ein Verfahren zur Härtung von Porensteinen o. ä., wobei Rohlinge der Steine in einen Innenraum eines Autoklaven eingebracht werden, dieser druckdicht verschlossen und danach in den Innenraum des Autoklaven unter Druck stehender Wasserdampf geleitet oder in dem Autoklaven aus dort befindlichem Wasser unter Hitzezufuhr Wasserdampf erzeugt wird, der anschließend während eines bestimmten Zeitraums (t2-t3) auf die Rohlinge einwirkt, wodurch letztere aushärten, wonach in dem Zeitraum (t3-t4) einer ersten Trocknungsphase der Steine in dem Innenraum des Autoklaven Wasserdampf aus diesem entnommen wird. Um eine möglichst effektive Trocknung der Steine mit einer möglichst geringen Anzahl von Trocknungszyklen zu erreichen, wird erfindungsgemäß vorgeschlagen, nach Abschluss der Härtung eine oder mehrere weitere sich an die erste Trocknungsphase anschließende Trocknungsphasen der Steine zu durchlaufen und vor jeder weiteren Trocknungsphase die Temperatur in dem Autoklaven während einer einen Zeitraum (t4-t5) einnehmenden Überhitzungsphase bis in das Zentrum der Rohlinge hinein zu erhöhen und anschließend den Druck in dem Autoklaven während einer einen Zeitraum (t5-t6) einnehmenden Trocknungsphase abzusenken, so dass im Wege einer Entspannungsverdampfung zuvor in den Rohlingen enthaltenes Wasser in Dampfform aus diesen ausgetrieben und aus dem Autoklaven abgeführt wird.

## Beschreibung

### Einleitung

Die Erfindung betrifft ein Verfahren zur Härtung von Porensteinen o.ä., wobei Rohlinge der Steine in einen Innenraum eines Autoklaven eingebracht werden, dieser druckdicht verschlossen und danach in den Innenraum des Autoklaven unter Druck stehender Wasserdampf geleitet oder in dem Autoklaven aus dort befindlichem Wasser und Hitzezufuhr Wasserdampf erzeugt wird, der anschließend während eines Zeitraums (t2-t3) auf die Rohlinge einwirkt, wodurch letztere aushärten, wonach in einem Zeitraum (t3-t4) einer ersten Trocknungsphase der Steine in dem Innenraum des Autoklaven Wasserdampf aus diesem entnommen wird.

### Stand der Technik

Industriell hergestellte Porensteine haben im Bauwesen in Form von meist quaderförmigen Bausteinen weite Verbreitung erfahren. Insbesondere im Rohbau bieten sich industriell hergestellte Porensteine und Kalksandsteine durch ihre geringen Maßtoleranzen und die hohe Festigkeit als Grundmaterial für tragendes Mauerwerk an.

Die Herstellung von Porensteinen erfolgt in industriellem Maßstabe im Wesentlichen durch Vermischen von Wasser mit den Ausgangsmaterialien sehr fein gemahlenem Sand, Branntkalk (Calziumoxid) sowie Zement, wobei das gewonnene Gemisch aus Sand, Zement und gelöschtem Kalk mittels Aluminiumpulver unter Wasserstoffgas-Erzeugung aufgeschäumt wird und anschließend aus dem Teigkuchen geschnittene Rohlinge in Autoklaven in Sattdampfatmosphäre bei Temperaturen von rund 200 °C und einem Druck von etwa 12 bar durch eine Silikatreaktion an der Oberfläche der Sandkörner über eine Dauer von mehreren Stunden gehärtet werden.

Da die Steine nach Beendigung des Herstellungsprozesses bedingt durch die Sattdampfatmosphäre im Autoklaven während der Härtung eine Restfeuchte aufweisen, ist vor der Weiterverwendung als Baumaterial bisweilen eine Trocknung von Nöten. Findet eine solche Trocknung nicht oder nur unzureichend statt, so führt dies zu verlängerten Trocknungszeiten bei Neubauten bzw. bei unzureichender Beachtung der erforderlichen Trocknungszeiten und zu frühzeitigem Erstbezug häufig zu sehr nachteiliger Schimmelbildung in den Innenräumen des Gebäudes.

Das Patent EP 0 538 755 B1 beschreibt in diesem Zusammenhang ein Verfahren zur Härtung von porösem stückigem Gut, das gekennzeichnet ist durch einen mit dem Härtungsvorgang kombinierten Trocknungsprozess. Zum Erzielen der Verdampfung von in dem Gut befindlichen flüssigen Wasser während des Härtungsvorganges wird eine die Rohlinge im Innenraum des Autoklaven umgebende Atmosphäre von überhitztem Dampf vorgeschlagen. Weiterhin ist vorgesehen, der sich über die Dauer der Härtung mit aus dem Gut verdampftem Wasser anreichernden Atmosphäre innerhalb eines Autoklaven kontinuierlich Dampf zu entnehmen und zum vollständigen Aufheizen eines mit zeitversetztem Zyklus betriebenen weiteren Autoklaven zu verwenden. Dabei soll der Druck in dem Autoklaven während der gesamten Härtungsund Trocknungsphase konstant gehalten werden. Der Vorteil in Form des nach dem Härtungsvorgang nur noch geringeren Wassergehalts der Steine geht mit dem großen Nachteil des Verfahrens einher, dass bedingt durch das Austreiben des Wassers noch vor vollendeter Härtung die zusammenhängende Struktur des noch ungehärteten Rohlings geschädigt werden kann und das Produkt nach der Härtung Risse aufweist.

Darüber hinaus ist aus der EP 0 624 561 A1 ein gattungsgemäßes Verfahren bekannt, bei dem nach etwa 2/3 der Härtezeit mit einer Druckpulsation begonnen wird, um auf diesem Wege eine Trocknung der Steine zu erzielen. Dabei wird über einen kurzen Zeitraum, und zwar mit einer Frequenz zwischen 30 und 60 pro Stunde, vorzugsweise zwischen 40 und 50 pro Stunde der Druck um 0,5 bis maximal 1,5 bar durch Ablassen von Dampf abgesenkt und anschließend durch Zuführen von Wärmeenergie, beispielsweise mit Hilfe überhitzten Dampfes, der Druck wieder aufgebaut. Insgesamt kann dieser Vorgang der Druckabsenkung und -erhöhung bis zu 100 mal hintereinander durchgeführt werden. Als besonders wirkungsvoll wird in diesem Zusammenhang eine Verfahrensweise beschrieben, bei der derselbe Dampf, der bei der Druckerniedrigung aus dem Autoklaven abgelassen wird, nach einer Überhitzung auf etwa 220°C dem Autoklaven zur Temperaturerhöhung wieder zugeführt wird. Wesentlich bei dem bekannten Verfahren ist es, dass die Pulsation während der normalen Härtezeit durchgeführt wird, um die gesamte Prozesszeit durch die Trocknungsphasen nicht zu erhöhen. Aufgrund der während der Härtung stattfindenden Bildung von Kalziumsilikathydratphasen in den Steinen ist die bei den bekannten Verfahren genannte besonders niedrige Druckdifferenz von 0,4 bis 0,6 bar während der Pulsation einzuhalten. Der Druck im Autoklaven schwankt während dieser Pulsation zwischen ca. 10,5 bar und 11 bar. Eine gegenüber diesem Druckniveau signifikante Absenkung des Drucks erfolgt erst nach Abschluss der Trocknungs-, d. h. Druckpulsationsphase.

In der Praxis hat sich das bekannte Verfahren nicht durchsetzen können, da der tatsächliche Trocknungseffekt weit hinter den theoretischen Erwartungen zurückgeblieben ist.

### Aufgabe

Die Anforderungen bei der Weiterverwendung von Porensteinen erfordern das Einhalten eines maximalen Feuchtigkeitsgehaltes. Aus diesem Grunde ist es erstrebenswert, ein Verfahren zur Herstellung von Porensteinen derart auszulegen, dass im Anschluss einerseits keine weitere Trocknung mehr erforderlich ist und andererseits hohe Qualitätsanforderungen an die produzierten Steine eingehalten werden können.

### Lösung

Die Aufgabe wird erfindungsgemäß dadurch gelöst, dass eine oder mehrere weitere sich an die erste Trocknungsphase anschließende Trocknungsphase(n) der Steine durchlaufen werden, und dass vor jeder weiteren Trocknungsphase die Temperatur in dem Autoklaven während einer einen Zeitraum einnehmenden Überhitzungsphase bis in das Zentrum der Rohlinge hinein erhöht und anschließend der Druck im Autoklaven während der einen Zeitraum einnehmenden Trocknungsphase abgesenkt wird, so dass im Wege einer Entspannungsverdampfung zuvor in den Rohlingen enthaltenes Wasser in Dampfform aus diesen ausgetrieben und aus dem Autoklaven herausgeführt wird.

Wesentlich für den hervorragenden Trocknungseffekt des erfindungsgemäßen Verfahrens ist der Umstand, dass eine vollständige "Durcherhitzung" der Rohlinge während der Überhitzungsphase stattfindet. Am Ende der Überhitzungsphase liegt somit in den Rohlingen überall eine homogene Temperaturverteilung vor. Wird nunmehr in einem nächsten Schritt während der folgenden Trocknungsphase der Druck in dem Autoklaven abgesenkt, so stellt sich das Phänomen der so genannten "Entspannungsverdampfung" ein, wobei die gesättigt siedende Flüssigkeit in diesem Fall in Form von Kristallwasser in den Steinrohlingen eingelagert ist. Durch das sich einstellende Druckgefälle zwischen dem Inneren der Rohlinge und dem abgesenkten Autoklavendruck (z. B. auf Atmosphärendruck) findet ein wirkungsvoller Transport von Wassertropfen und Dampf aus dem porösen Gefüge der Rohlinge zunächst in das Innere des Autoklaven statt. Auf diese Weise lassen sich die zur Auslagerung des freien Wassers und Kristallwassers aus der Matrix der Rohlinge erforderlichen Diffusionsvorgänge erzielen.

Bei dem aus der EP 0 624 561 A1 bekannten Verfahren kommt es aufgrund der hohen Pulsationsfrequenz und damit der kurzen jeweiligen Überhitzungszeiten weder zu einer hinreichenden Durcherhitzung der Rohlinge noch anschließend in der Phase der Druckabsenkung zu einer hinreichend großen "treibenden Kraft" in Form eines Druckgefälles, das Wasser und Dampf aus dem porösen Gefüge der Rohlinge herausbefördern könnte, weshalb das Trocknungsergebnis insgesamt äußerst unzufriedenstellend ist.

Ein weiterer wesentlicher Aspekt der erfindungsgemäßen Verfahrensweise ist der Umstand, dass die Trocknung erst nach Abschluss des eigentlichen Härtevorgangs stattfindet. Dies bedingt zwar im Vergleich mit dem Verfahren gemäß der EP 0 624 561 A1 eine gewisse Verlängerung der Prozessdauer, doch erlaubt die Trocknung erst nach Abschluss der Härtung, die Druckpulsation mit einer entsprechend großen Amplitude von 1,5 bis 2,5 bar, vorzugsweise ca. 2 bar, durchzuführen.

Gemäß einer bevorzugten Verfahrensweise wird nach einer Trocknungsphase durch eine Zufuhr von Sattdampf in den Autoklaven der Druck in dem Innenraum des Autoklaven erhöht, vorzugsweise ungefähr auf ein Niveau, das vor der Druckabsenkung während der vorangegangenen Trocknungsphase geherrscht hatte. Der zugeführte Sattdampf sorgt für die Druckerhöhung auf 2,0 bar, anschließend wird überhitzter Dampf bis 400°C in den Autoklav geleitet, um die Rohling auf dieses Temperaturniveau zu erhitzen.

Entgegen der im Stand der Technik enthaltenen Lehre kann allein mit Hilfe einer Zufuhr von Sattdampf eine Steintrocknung, d.h. Reduzierung des Wassergehalts der Steine, nicht erzielt werden, da während einer solchen Prozessphase ein Austritt von Wasserdampf aus dem porösen Steinmaterial nicht möglich ist. Die Porösität der Steine mit ihren kleinen für den Stofftransport zur Verfügung stehenden Querschnitten verhindert zusammen mit der chemischen Bindung des in Form von Kristallwasser eingelagerten Wassers, dass es gleichzeitig zu dem erforderlichen Energietransport durch die Poren in das Innere der Steine hinein und zu einem entgegengesetzten Wasserdampftransport durch dieselben Porenquerschnitte aus dem Stein heraus kommt. Der Sattdampf kondensiert aufgrund des vergleichsweise geringen Temperaturüberschusses zu seinem Taupunkt bereits nach einer kurzen Wegstrecke in das poröse kühlere Steinmaterial hinein, so dass eine wirksame Temperaturerhöhung im Innern der Steine, insbesondere in deren Zentrum, ausbleibt. Im Endeffekt lässt sich mit einer bloßen Sattdampfzufuhr eine Reduzierung der Steinfeuchte in der Praxis auch bei einer Hintereinanderschaltung mehrerer solcher Zyklen nicht erzielen.

Alternativ zu einer Zufuhr von (überhitztem) Wasserdampf kann die Einbringung von Energie in den Autoklaven auch dadurch erfolgen, dass nach der Trocknungsphase die Temperaturerhöhung durch bloße Wärmezufuhr, insbesondere ohne Wasserdampfzufuhr, erfolgt, wobei der Druck in den Autoklaven in diesem Falle mit jeder Trocknungsphase fortlaufend sinkt. Da während der Überhitzungsphase in diesem Falle kein Massentransport in den Autoklaven hinein stattfindet, kommt es zu keinerlei Druckerhöhung in dem Autoklaven, sondern lediglich zu einer Temperaturerhöhung in demselben. Wird der Druck sodann reduziert, kommt es wiederum zum Vorgang der Entspannungsverdampfung. In diesem Falle ist es jedoch wichtig, den Druck beispielsweise von einem Ausgangswert von beispielsweise 10 bar in insgesamt z. B. fünf Schritten zum Beispiel auf Atmosphärendruck abzusenken und in fünf dazwischenliegenden Phasen jeweils wieder Energie in den Autoklaven einzubringen, um den Vorgang der Entspannungsverdampfung entsprechend oft wiederholen zu können.

Insbesondere wenn während der Überhitzungsphase die Energie in Form überhitzten Wasserdampfes eingebracht wird, findet ein sehr rascher Energietransport in das Innere der Rohlinge statt, da es kaum zu Kondensationserscheinungen kommt. In diesem Falle lassen sich vergleichsweise kurze Überhitzungsphasen realisieren, die typischerweise einen Zeitraum zwischen 5 Minuten und 15 Minuten, vorzugsweise zwischen 7 und 10 Minuten einnehmen.

Die zusätzliche Verwendung einer Vakuumpumpe zur weiteren Druckabsenkung unterhalb des Umgebungsdrucks ist erfindungsgemäß vorgesehen, um eine weitere Siedetemperaturerniedrigung gegen Ende eines Trocknungszyklus' zu bewirken und den Trocknungseffekt zu verbessern.

Der gesamte Trocknungsprozess kann erfindungsgemäß aus mehreren hintereinander ausgeführten Zyklen der vorgenannten Art bestehen, um den gewünschten Grad des Trocknungseffekts zu erzielen.

### Ausführungsbeispiel

Eine Ausgestaltung des Verfahrens wird im Folgenden anhand eines Ausführungsbeispiels näher erläutert. Es zeigt
- Fig. 1:: Diagrammdarstellung der Zeitverläufe von Temperatur und Feuchtigkeitsgehalt im Stein,
- Fig. 2:: Diagrammdarstellung der Zeitverläufe von Temperatur und absolutem Druck im Innenraum des Autoklaven,
- Fig. 3:: wie Figur 1, jedoch für eine alternative Verfahrensweise und
- Fig. 4:: wie Figur 2, jedoch für die alternative Verfahrensweise gemäß Fig. 2

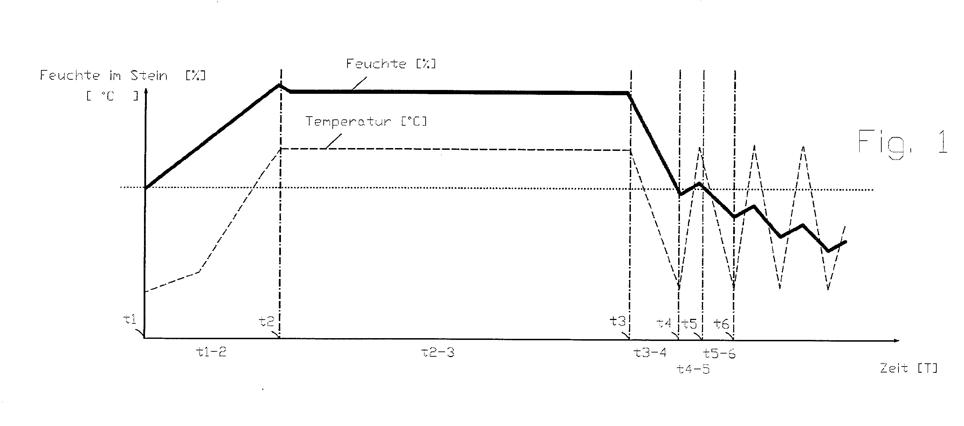

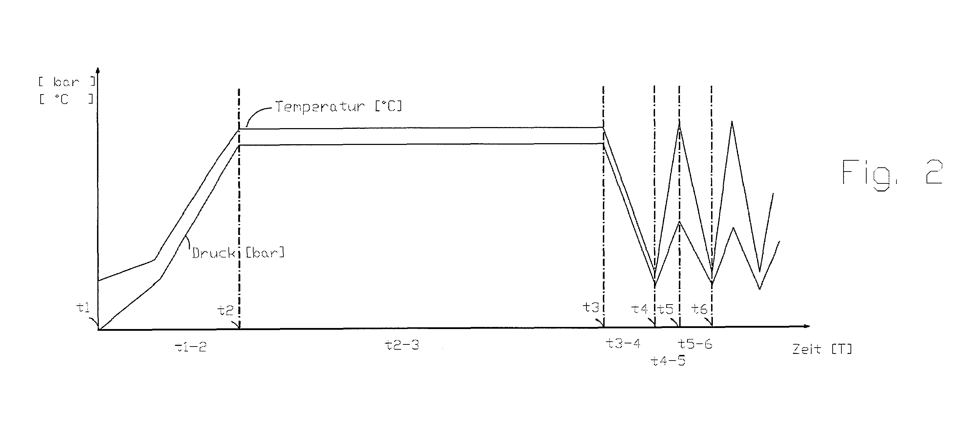

Eine erste Verfahrensweise weist den in den Figuren 1 und 2 dargestellten Verfahrensablauf auf:

Zu Beginn des Härtungsprozesses zum Zeitpunkt t1 wird dem Innenraum des Autoklaven Dampf zugeführt, wodurch sich Druck und Temperatur während des Zeitraumes t1-2 kontinuierlich erhöhen bis auf ein Niveau von etwa 12 bar und 191 °C zum Zeitpunkt t2. Das Druckund Temperaturniveau wird in der anschließenden Härtungsphase für einen Zeitraum t2-3 von fünf bis neun Stunden bis zum Zeitpunkt t3, an dem die Härtung abgeschlossen ist, gehalten. Durch das darauf folgende den Zeitraum t3-4 andauernde Ablassen von Satt- oder Nassdampf aus dem Innenraum des Autoklaven bis zum Zeitpunkt t4 wird der Druck im Innenraum abgesenkt, was eine Erniedrigung der Siedetemperatur von Wasser entsprechend dessen Dampfdruckkurve zur Folge hat und zu einem spontanen Einsetzen von Sieden des noch in den heißen Steinen befindlichen Wassers führt. Die so erfolgende Trocknung der Steine reicht im Allgemeinen jedoch nach häufigen Maßgaben zur Weiterverwendung der Steine nicht aus, da typischerweise nur eine Restfeuchte erzielt wird, die der Anfangsfeuchte des ungehärteten Materials entspricht, so dass nach dem Zeitpunkt t4 eine erfindungsgemäße mehrzyklische Trocknung der Steine erfolgt.

Erfindungsgemäß wird zum Zeitpunkt t4 hierzu wiederum Sattdampf in den Innenraum des Autoklaven geleitet und die Sattdampfatmosphäre auf einen Druck von 1,5 bar gebracht. Anschließend wird die noch gesättigte Dampfatmosphäre durch reine Zufuhr von Wärme mittels eines im Autoklaven angeordneten Wärmetauschers auf eine Temperatur von 191 °C überhitzt bis zum Zeitpunkt t5, was wiederum etwa dem Temperaturniveau zum Zeitpunkt t3 nach erfolgter Härtung entspricht, allerdings aufgrund der Überhitzung auf deutlich geringerem Druckniveau von etwa nur 1 bis 3 bar. Alternativ kann anstelle einer Trennung von (Satt-)Dampfzufuhr und Überhitzung auch sogleich überhitzter Dampf zugeführt werden. Wesentlich dabei ist, dass die Rohlinge nach Abschluss der Überhitzungsphase homogen auf die Temperatur T5 "durcherhitzt" sind, um hinreichend Energie für die anschließende Entspannungsverdampfung in sich gespeichert zu haben.

In der Phase der Überhitzung im Zeitraum t4-5 haben die Steine wiederum Feuchtigkeit aus der Atmosphäre aufgenommen und somit zum Zeitpunkt t5 einen leicht erhöhten Feuchtigkeitsgehalt gegenüber dem Beginn der Überhitzung zum Zeitpunkt t4. Im Anschluss erfolgt im Zeitraum t5-6 ein Druckausgleich mit der Umgebung und eine darüber hinausgehende Druckabsenkung unter Zuhilfenahme eine Vakuumpumpe, wodurch aufgrund der somit bedingten Siedetemperaturerniedrigung das noch in den Steinen befindliche Wasser zu verdampfen beginnt (Entspannungsverdampfung) und der eigentliche Trocknungsvorgang einsetzt, bis die Steine zum Zeitpunkt t6 durch Abgabe von Verdampfungsenthalpie an das aus ihnen herausverdampfende Wasser auf dessen Siedetemperatur abgekühlt sind.

Sollte die gewünschte Restfeuchte der Steine zum Zeitpunkt t6 noch nicht gegeben sein, ist erfindungsgemäß vorgesehen, eine beliebige weitere Anzahl der aus den Verfahrensschritten in den Zeiträumen t4-5 und t5-6 bestehenden Trocknungszyklen durchzuführen.

Bei dem in den Figuren 1 und 2 veranschaulichten Verfahren kann der Energieeintrag in den Autoklaven in den Phasen t4-5 und t6-7 usw. entweder dadurch erfolgen, dass überhitzter Dampf zugeführt wird oder dass Sattdampf zugeführt wird und dieser mittels eines in dem Autoklaven befindlichen Wärmetauschers kontinuierlich überhitzt wird. Darüber hinaus ist auch eine Kombination der beiden vorgenannten Varianten möglich, nämlich dass überhitzter Dampf zugeführt wird und zusätzlich dazu mittels des Wärmetauschers noch Wärmeenergie in den Autoklaven eingebracht wird, um auf diese Weise eine möglichst rasche Temperatursteigerung zu realisieren.

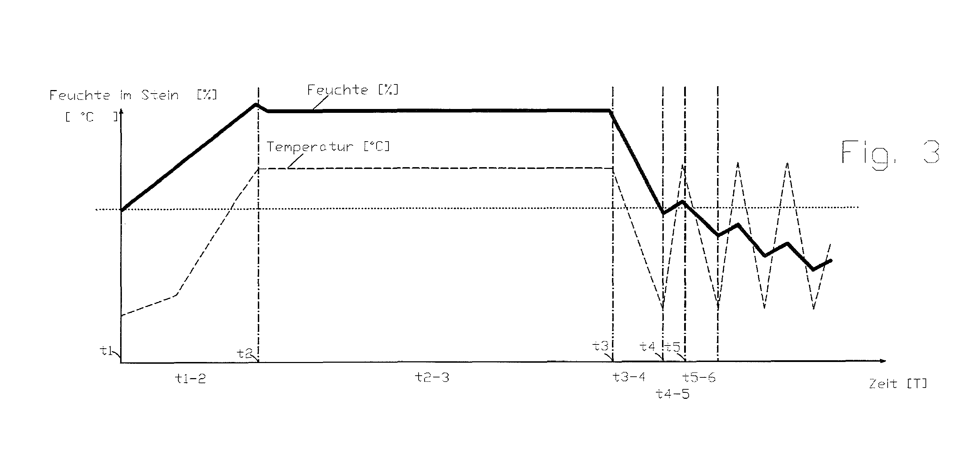

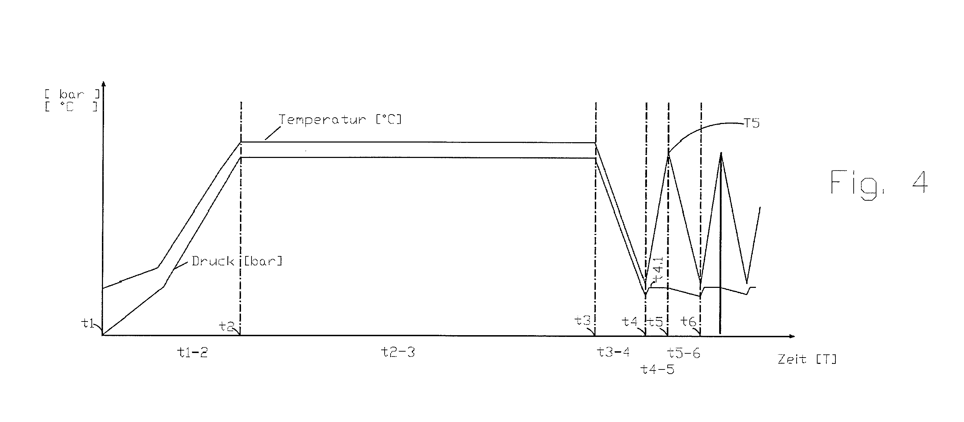

Als Alternative zu den vorgenannten Verfahrensweisen ist in den Figuren 3 und 4 eine Variante dargestellt, bei der zwischen den Zeitpunkten t4 und t4.1 eine bloße Sattdampfzufuhr erfolgt, wodurch der Druck in dem Autoklaven ansteigt. Im Anschluss an den Zeitpunkt t4.1 erfolgt keine Dampfzufuhr mehr, sondern mit Hilfe eines in dem Autoklaven befindlichen Wärmetauschers wird allein noch Wärmeenergie in den Autoklaven eingebracht. In dem Zeitraum zwischen den Zeitpunkten t4.1 und t5 erfolgt somit kein weiterer Anstieg des Drucks mehr, wohl aber ein Temperaturanstieg bis zu der Temperatur T5 zum Zeitpunkt t5. Anschließend an den Zeitpunkt t5 erfolgt eine Druckabsenkung und ein Trocknen der Porensteine auf dem Wege der Entspannungsverdampfung. Anschließend an den Zeitpunkt t6 erfolgt wiederum zunächst eine bloße Sattdampfzufuhr und anschließend eine bloße Überhitzung ohne Dampfzufuhr.

## Patentansprüche

1. Verfahren zur Härtung von Porensteinen o. ä., wobei Rohlinge der Steine in einen Innenraum eines Autoklaven eingebracht werden, dieser druckdicht verschlossen und danach in den Innenraum des Autoklaven unter Druck stehender Wasserdampf geleitet oder in dem Autoklaven aus dort befindlichem Wasser unter Hitzezufuhr Wasserdampf erzeugt wird, der anschließend während eines bestimmten Zeitraums (t2-3) auf die Rohlinge einwirkt, wodurch letztere aushärten, wonach in dem Zeitraum (t3-4) einer ersten Trocknungsphase der Steine in dem Innenraum des Autoklaven Wasserdampf aus diesem entnommen wird, **dadurch gekennzeichnet, dass** nach der Härtung der Rohlinge eine oder mehrere sich an die erste Trocknungsphase anschließende Trocknungsphasen der Steine durchlaufen werden und vor jeder weiteren Trocknungsphase die Temperatur in dem Autoklaven während einer einen Zeitraum (t4 bis t5) einnehmenden Überhitzungsphase bis in das Zentrum der Rohlinge hinein erhöht wird und anschließend der Druck in dem Autoklaven während einer einen Zeitraum (t5 bis t6) einnehmenden Trocknungsphase abgesenkt wird, so dass im Wege einer Entspannungsverdampfung zuvor in den Rohlingen enthaltenes Wasser in Dampfform aus diesen ausgetrieben und aus dem Autoklaven abgeführt wird.

2. Verfahren nach Anspruch 1, **dadurch gekennzeichnet, dass** nach einer Trocknungsphase durch eine Zufuhr von Wasserdampf in den Autoklaven der Druck in dem Innenraum des Autoklaven wieder erhöht wird, vorzugsweise ungefähr auf ein Niveau, das vor der Druckabsenkung während der vorangegangenen Trocknungsphase geherrscht hatte.

3. Verfahren nach Anspruch 1, **dadurch gekennzeichnet, dass** nach einer Trocknungsphase die Temperaturerhöhung in dem Autoklaven und den Rohlingen durch bloße Energiezufuhr, insbesondere ohne Wasserdampfzufuhr, erfolgt, wobei der Druck in dem Autoklaven mit jeder Trocknungsphase fortlaufend sinkt.

4. Verfahren nach einem der Ansprüche 1 bis 3, **dadurch gekennzeichnet, dass** die Temperaturerhöhung während einer Überhitzungsphase zwischen 50°C und 150°C, vorzugsweise zwischen 80°C und 120°C oberhalb der jeweiligen Sattdampftemperatur beträgt.

5. Verfahren nach einem der Ansprüche 1 bis 4, **dadurch gekennzeichnet, dass** eine Überhitzungsphase einen Zeitraum (t4-t5) zwischen 2 Minuten und 20 Minuten, vorzugsweise zwischen 3 Minuten und 5 Minuten, einnimmt.

6. Verfahren nach einem der Ansprüche 1 bis 5, **dadurch gekennzeichnet, dass** sich an die erste Trocknungsphase mindestens zwei, vorzugsweise mindestens drei weitere Trocknungsphasen anschließen.

7. Verfahren nach einem der Ansprüche 1 bis 6, **dadurch gekennzeichnet, dass** der Druck in dem Autoklaven am Ende eines Zeitraums (t4-t5) der Überhitzungsphase zwischen 1 bar und 3 bar, vorzugsweise zwischen 1,3 und 1,7 bar, beträgt.

8. Verfahren nach einem der Ansprüche 1 bis 7, **dadurch gekennzeichnet, dass** der Druck am Ende eines Zeitraums (t5-t6) einer Trocknungsphase mindestens bis auf den Wert des Atmösphärendrucks, vorzugsweise bis auf einen Wert unterhalb desselben, abgesenkt wird, wobei eine eventuelle Absenkung des Drucks im Autoklaven unterhalb des Atmosphärendrucks mit Hilfe einer Vakuumpumpe erfolgt.

9. Verfahren nach einem der Ansprüche 1 bis 8, **dadurch gekennzeichnet, dass** die während des Zeitraums (t4-5) der Überhitzungsphase dem Autoklaven zugeführte Wärme mittels eines in dem Autoklaven oder einem mit dem Autoklaven in Verbindung stehenden Kondensatsammelraum angeordneten Wärmetauschers, vorzugsweise in Form eines Pillow-Plates-Wärmetauschers, zugeführt wird.

10. Verfahren nach einem der Ansprüche 1 bis 9, **dadurch gekennzeichnet, dass** die während eines Zeitraums (t4-t4.1) Sattdampf in den Autoklaven eingeleitet und somit der Druck erhöht wird und dass während eines Zeitraums (t4.1-t5) Wärme mittels eines in dem Autoklaven oder in einem mit dem Autoklaven in Verbindung stehenden Kondensatzsammelraum angeordneten Wärmetausches, vorzugsweise in Form eines Pillow-Plates-Wärmetauschers, zugeführt wird.
